(19) Europäisches Patentamt
European Patent Office
Office européen des brevets

(11) EP 1 909 190 A1

(12) EUROPEAN PATENT APPLICATION

(43) Date of publication:
09.04.2008 Bulletin 2008/15

(51) Int Cl.:
*G06F 17/14* (2006.01)

(21) Application number: 06020752.9

(22) Date of filing: 02.10.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK RS

(71) Applicant: Rohde & Schwarz GmbH & Co. KG
81671 München (DE)

(72) Inventor: Schumacher, Adrian
81541 München (DE)

(74) Representative: Körfer, Thomas et al
Mitscherlich & Partner
Patent- und Rechtsanwälte
Postfach 33 06 09
80066 München (DE)

(54) **Optimized fourier transform for non-radix-2 dft length**

(57) A method for applying a Discrete Fourier Transform (DFT) to a signal vector (x) of a telecommunication signal having a given length (N), wherein $N = N_1 * N_2$, $N_1$ and $N_2$ are positive integers, comprises the steps:
- forming (210) an input array ($\hat{x}$), wherein each component satisfies the equation:

$$\hat{x}(n_1, n_2) = x(n_1 * N_2 + n_2)$$

- forming (220) a first intermediate array (f), wherein each component satisfies the equation:

$$f(k_1, n_2) = \sum_{n_1=0}^{N_1-1} \hat{x}(n_1, n_2) W_{N_1}^{n_1 k_1}$$

- forming (230) a second intermediate array (g) wherein each component satisfies the equation:

$$g(k_1, n_2) = f(k_1, n_2) W_N^{n_2 k_1}$$

- forming (240) a result array ($\hat{X}$), wherein each array component satisfies the equation:

$$\hat{X}(k_1, k_2) = \sum_{n_2=0}^{N_2-1} g(k_1, n_2) W_{N_2}^{n_2 k_2}$$

Index Map — 210

1st DFT — 220

Multiply twiddle factors — 230

2nd DFT — 240

200

Fig. 2

**Description**

The present invention relates to signal processing in mobile communications. In particular it relates to an efficient implementation of the Discrete Fourier Transform (DFT).

TECHNICAL BACKGROUND AND PRIOR ART

Modem communication systems for high data rates such as WLAN, WIMAX or LTE (Long Term Evolution, also called Evolved-UTRA, Super 3G, or 3.9G.) use Orthogonal Frequency Division Multiplexing (OFDM) where multiple sub-carriers are orthogonally aligned in the frequency domain. This is easily achieved with the Fourier transform. Usually, the number of sub-carriers is chosen to be a power of two, so that a radix-2 FFT may be used.

Technical background for a DFT-method is disclosed in US 6,704,760 B2.

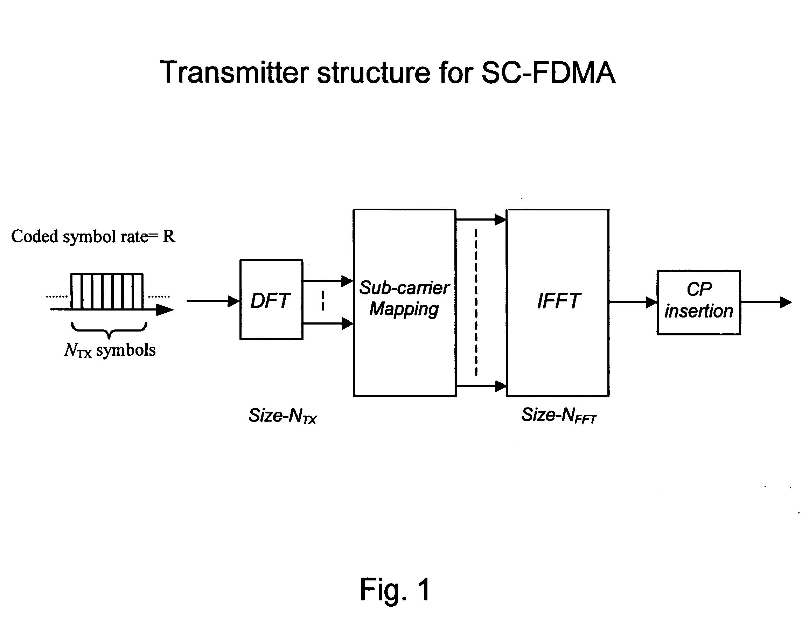

However, it might happen that the number of sub-carriers is an arbitrary number that is not a power of two. Especially in Single Carrier FDMA, a number of symbols N is first transformed from the time domain to the frequency domain before the sub-carrier mapping is done, as may be seen in Fig. 1.

Since the number of used sub-carriers $N_{TX}$ is usually less than the number of available sub-carriers $N_{FFT}$, $N_{TX}$ is rarely a power of two. In this case, choosing a larger radix-2 or radix-4 FFT and using zero padding will not be accurate enough.

There exist some algorithms for an arbitrary length DFT [1] that use less operations than a direct computation with the DFT equation, such as

- Cooley-Tukey FFT
- Mixed-Radix FFT
- Chirp-z Transform

However, the Cooley-Tukey DFT is only efficient if the DFT length is a composite length, i.e. $N = N_1 * N_2$ but not a prime length (i.e. $N_1$ = prime, $N_2$ = 1).

If the DFT length is prime or relatively prime, further efficient and fast algorithms exist. Examples are Rader's Conversion [2] that would not require pre- and post-multiplications and is based on circular convolution, the Winograd's Fourier Transform Algorithm (WFTA) [3] and the Prime-Factor FFT Algorithm (PFA) [4]. Several of those algorithms may be combined to a Mixed-Radix DFT algorithm [5]. However, this requires a complex control logic. For the DFT lengths that are not caught by the available prime-DFTs, a relatively slow direct calculation will have to be used.

OBJECT OF THE INVENTION

It is therefore an object of the invention to provide a computationally efficient method and apparatus for computing an FFT without requiring a complex control logic.

SHORT SUMMARY OF THE INVENTION

This object is achieved according to the invention by a method as defined in independent claim 1 and the apparatus as defined in independent claim 8. Advantageous embodiments are defined in the independent claims.

BRIEF DESCRIPTION OF THE FIGURES

These and other aspects, features and advantages of the invention will become more evident when studying the following detailed description, in connection with the annexed drawing in which

Fig. 1 shows a transmitter structure for Single Carrier FDMA;
Fig. 2 shows a flowchart of a method according to one embodiment of the invention;
Fig. 3 shows a flowchart of a method according to one embodiment of the invention;
Fig. 4 shows a flowchart of a method according to one embodiment of the invention;
Fig. 5 shows a graph comparing different methods for computing a DFT in terms of multiplications.
Fig. 6 shows a graph comparing different methods for computing a DFT in terms of additions.
Fig. 7 shows a graph comparing different methods for computing a DFT in terms of memory usage.
Fig. 8 shows a graph comparing different methods for computing a DFT in terms of error signal power.

DETAILED DESCRIPTION OF THE INVENTION

Assuming that N is not a prime the "divide and conquer" strategy may be applied and N may be factored into $N = N_1 \cdot N_2 \cdot ... \cdot N_M$. The required arithmetic may be reduced using an index mapping to convert a one-dimensional DFT into a two- or higher dimensional DFT and therefore reduce the problem into several easier problems. The map used here is called the common factor map (CFM) and is explained e.g. in [6].

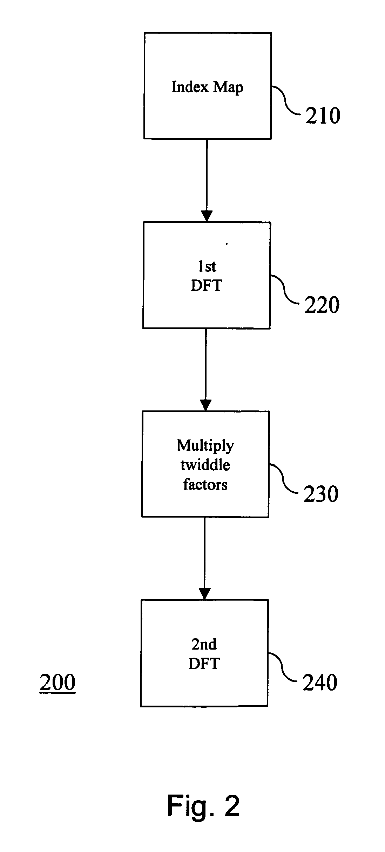

Fig. 2 shows a flowchart of a method according to one embodiment of the invention.

In step 210, the one-dimensional vector is represented as a two-dimensional array using a factoring of N and an index map. If $N = N_1 \cdot N_2$, the index map is obtained as

$$n = N_2 n_1 + n_2 \tag{1}$$

$$k = k_1 + N_1 k_2 \tag{2}$$

where $n_1 = 0, 1, 2, ... ,N_1\text{-}1$ and $n_2 = 0, 1, 2,... ,N_2\text{-} 1$, and the same for $k_1$ and $k_2$, respectively. In equation (1), n denotes the index of the input signal x in time domain and in equation (2), k denotes the index of the output X in frequency domain.

If the mapped input is denoted $\hat{x}(n_1,n_2)$ and the mapped output $\hat{X}(k_1,k_2)$, a two-dimensional DFT may be written as

$$\hat{X} = \sum_{n_2=0}^{N_2-1} \sum_{n_1=0}^{N_1-1} \hat{x} W_{N_1}^{n_1 k_1} W_N^{n_2 k_1} W_{N_2}^{n_2 k_2} \tag{3}$$

wherein

$$W_N = e^{-j2\pi/N} .$$

In step 220, the algorithm first calculates:

$$f(k_1,n_2) = \sum_{n_1=0}^{N_1-1} \hat{x}(n_1,n_2) W_{N_1}^{n_1 k_1} \tag{4}$$

what is a length-$N_1$ DFT that has to be evaluated $N_2$ times.

In step 230, the array $f(k_1, n_2)$ is then point-by-point multiplied with a so-called twiddle factor:

$$g(k_1,n_2) = f(k_1,n_2) W_N^{n_2 k_1} \tag{5}$$

Finally, $N_1$ DFTs of length $N_2$ may evaluated in step 240 as follows:

$$\hat{X}(k_1,k_2) = \sum_{n_2=0}^{N_2-1} g(k_1,n_2) W_{N_2}^{n_2 k_2} \tag{6}$$

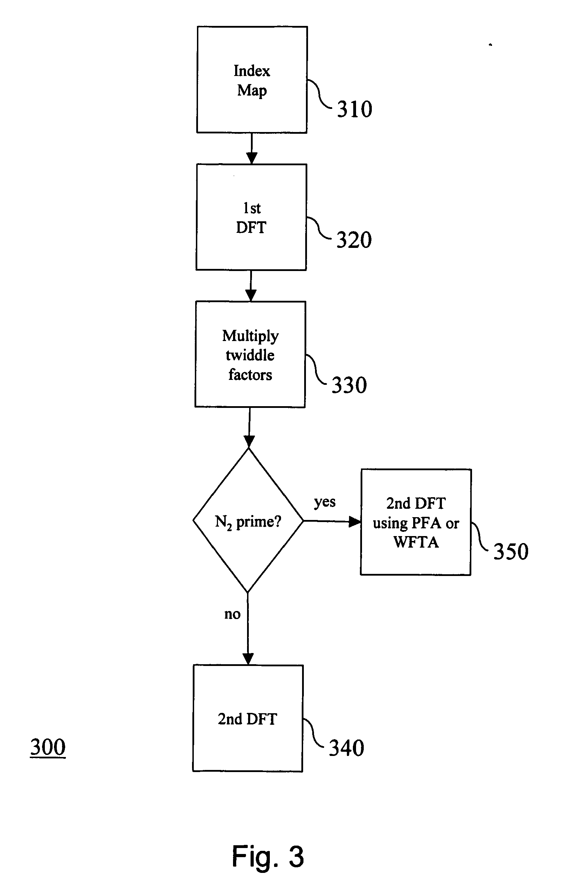

Fig. 3 shows a method according to another embodiment of the invention. There exist cases in which computational efficiency may be even further increased by applying specialized algorithms in an additional step 350, if it is known a priori whether there exists a factorization of N in which $N_2$ satisfies such a case.

E.g. if $N_2$ itself is a prime number, the Prime-Factor FFT Algorithm (PFA) or Winograd's Fourier Transform Algorithm (WFTA) as mentioned in the introduction may be applied. Further, if $N_2 = 2^k$ for an arbitrary integer k then a Radix-2-Algorithm (Cooley-Tukey) may be applied. Analogously, if $N_2 = 4^k$ for an arbitrary integer k then a Radix-4-Algorithm may be applied.

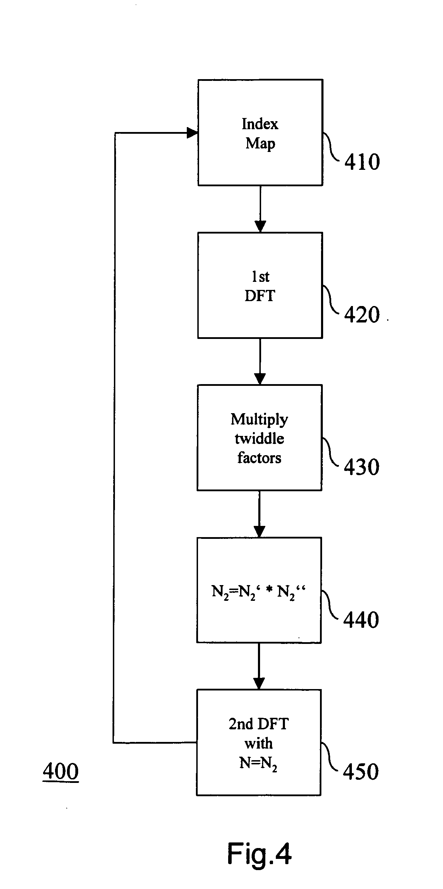

Fig. 4 shows a flowchart of a method according to a further embodiment of the invention. If $N_2$ does not satisfy one of the above-mentioned special cases, it may again be split in two factors $N_2'$ and $N_2''$ and the complexity may be reduced by recursively applying the same strategy to each of the length-$N_2$ DFTs in Equation 6.

Using equations 4 to 6, the total number of real multiplications results in

$$O_{mult} = 4(N_1^2 N_2 + N + N_1 N_2^2) \qquad (7)$$

and a total of

$$O_{add} = N(N_1 - 1) + N(N_2 - 1) \qquad (8)$$

additions is required. For the twiddle factors, maximum

$$O_{mem} = 2(N_1^2 + N + N_2^2) \qquad (9)$$

real entries are necessary. Since these arrays contain many identical values, the required amount of memory may be reduced by the expense of a little more arithmetic, and the number of operations may be reduced to some extent by exploiting the trivial multiplications. The number of operations and memory entries will be reduced according to the algorithm used for the length-$N_2$ DFT in step 240.

The algorithms listed in the introduction were implemented using the simulation tool MATLAB® and compared with the proposed method.

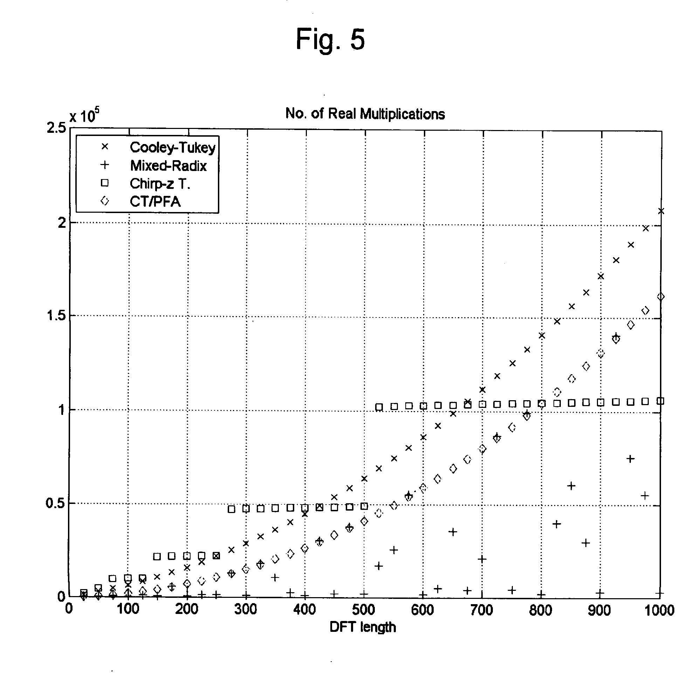

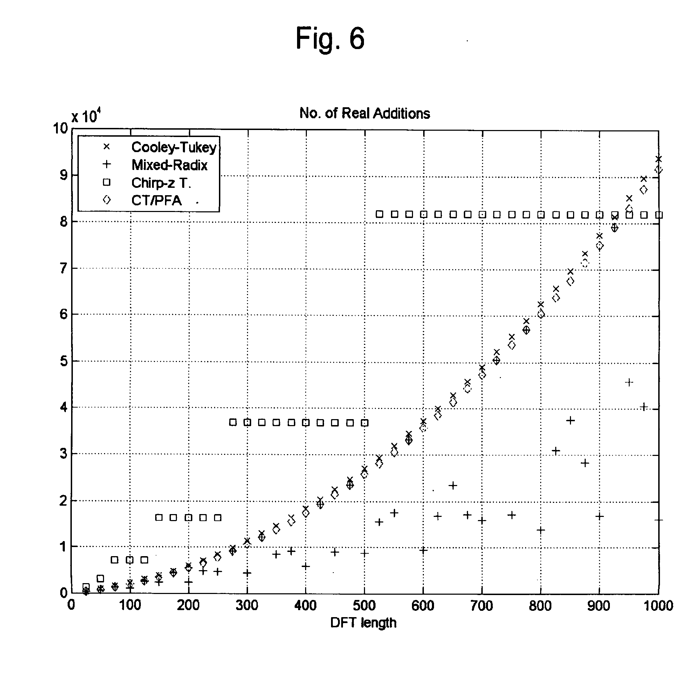

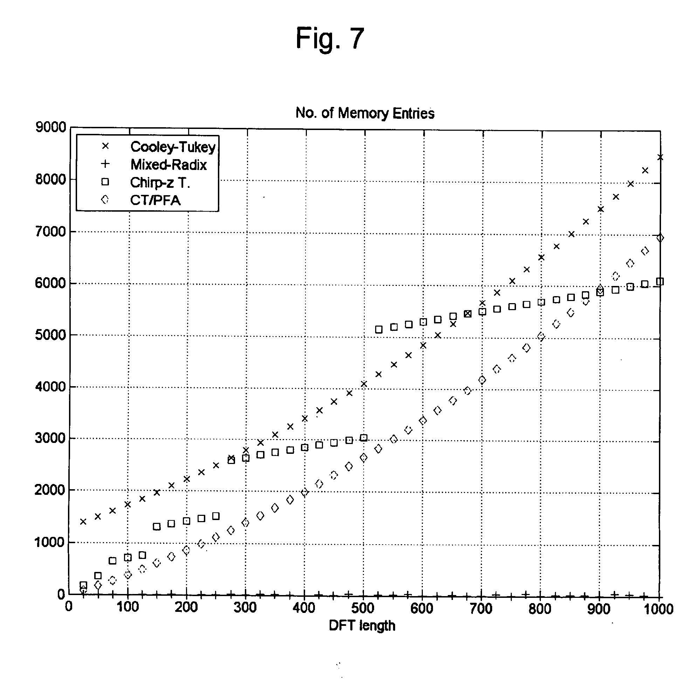

Figures 5, 6, 7 and 8 show graphs comparing different methods for computing a DFT in terms of the number of multiplications, the number of additions, the amount of memory used and error signal power. The DFT length was increased in steps of 25, i.e. the method according to the invention was executed with $N_2' = N_2' = 5$.

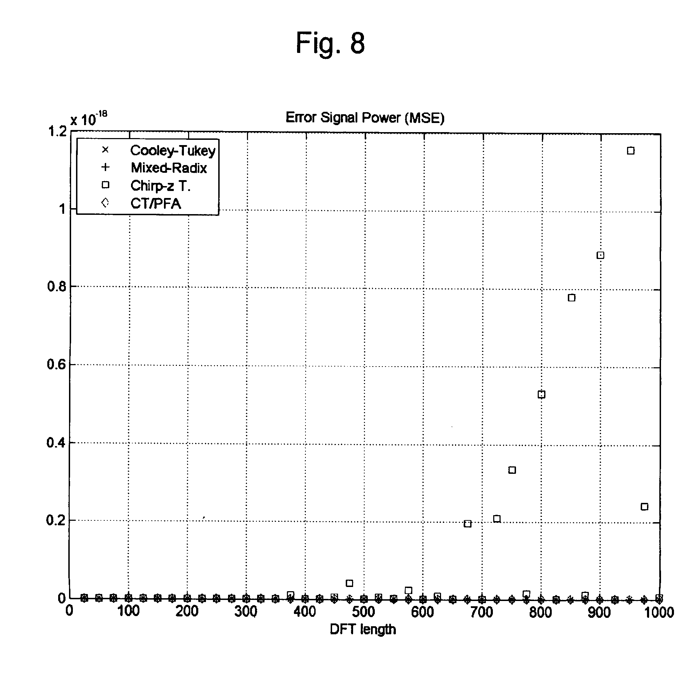

First, the number of multiplications, additions, and the required number of memory entries were computed for each algorithm. Note that one complex multiplication was assumed to require four real multiplications. The two necessary additions were not considered in this comparison. For the evaluation of the error signal power, the resulting vectors of the different transforms were compared with the result from the FFT function provided with MATLAB. The input data to the transforms was white Gaussian noise with $\sigma^2 = 1$. Through a Monte Carlo simulation with 100 runs, the result in Figure 8 was obtained.

The processing speed strongly depends on how the algorithms are implemented. If $N_1$ is a variable with a certain range and $N_2$ is constant, the appropriate algorithm for $N_2$ (step 240) may be chosen. Using an input array with $N_2$ rows and max ($N_1$) columns allows a flexible DFT that may compute a DFT-length which is an arbitrary integer multiple of $N_2$ ($N=N_1 \cdot N_2$). Implemented in a FPGA it is also relatively easy to parallelise the computations. It is desirable to have a small number of multiplications since they require more logic in a FPGA. If many different optimized prime length FFTs are used for the Mixed-Radix algorithm, it is the optimum solution in terms of the computational cost (and processing speed), memory usage and accuracy. But the complex control structure will require a considerable amount of logic as well. Look-up tables may be used to reduce the size of the control logic.

The Chirp-z and Cooley-Tukey algorithms represent a compromise between computational cost and complexity. Both of them require a similar amount of computations as well as memory. The Mixed-Radix algorithm offers several possibilities to make it more efficient. One is to factor the transform lengths further, i.e. more than two factors if possible. The number of multiplications may be reduced by exploiting the trivial multiplications ($\pm 1, \pm j$). The required memory will decrease if the twiddle factors of smaller transform length is derived from those of large transforms.

In summary, the above-described methods show improved performance when computing DFTs whose length may be expressed as a multiple of certain bases $N_2$ ($N_{TX} = N_1 * N_2$), such that they are, unlike a pure Cooley-Tukey DFT for example, well-suited for SC-FDMA modulation.

REFERENCES

[1] R. Tolimieri,M. An, and C. Lu, Algorithms for discrete Fourier transform and convolution. New York: Springer-Verlag, 1989.
[2] C.M. Rader, "Discrete Fourier Transforms when the Number of Data Samples is Prime," Proc. IEEE, vol. 56, pp. 1107-1108, 1968.
[3] S. Winograd, "On computing the Discrete Fourier Transform," Proc. Nat. Acad. Sci. USA, vol. 73, no. 4, pp. 1005-1006, April 1976.
[4] D. P. Kolba and T. W. Parks, "A Prime Factor FFT Algorithm Using High Speed Convolution," IEEE Transactions on Acoustics, Speech, and Signal Processing, vol. 25, no. 4, pp. 781-794, Aug 1977.
[5] R. C. Singleton, "An Algorithm for Computing the Mixed Radix Fast Fourier Transform," IEEE Transactions on Audio and Electroacoustics, vol. 17, no. 2, pp. 93-103, June 1969.
[6] C. S. Burrus and T.W. Parks, DFT/FFT and Convolution Algorithms. New York: John Wiley & Sons, 1985.
[7] H. W. Schüssler, Digitale Signalverarbeitung 1. Berlin: Springer-Verlag, 1994.

**Claims**

1. Method for applying a Discrete Fourier Transform (DFT) to a signal vector (x) of a telecommunication signal having a given length (N), wherein $N = N_1 N_2$, $N_1$ and $N_2$ are positive integers, comprising the steps:

   - forming (210) an input array ($\hat{x}$), wherein each component satisfies the equation:

$$\hat{x}(n_1, n_2) = x(n_1 * N_2 + n_2)$$

   - forming (220) a first intermediate array (f), wherein each component satisfies the equation:

$$f(k_1, n_2) = \sum_{n_1=0}^{N_1-1} \hat{x}(n_1, n_2) W_{N_1}^{n_1 k_1}$$

   - forming (230) a second intermediate array (g) wherein each component satisfies the equation:

$$g(k_1, n_2) = f(k_1, n_2) W_N^{n_2 k_1}$$

   - forming (240) a result array ($\hat{X}$), wherein each array component satisfies the equation:

$$\hat{X}(k_1, k_2) = \sum_{n_2=0}^{N_2-1} g(k_1, n_2) W_{N_2}^{n_2 k_2}$$

2. Method according to claim 1, wherein $N_2 = N_2' * N_2''$, $N_2'$ and $N_2''$ are positive integers and wherein the step of forming (240) the result array ($\hat{X}$) comprises executing the steps of the method according to claim 1 recursively using the second intermediate array (g) as input array ($\hat{x}$) and $N = N_2 = N_2'{}^* N_2''$.

3. Method according to claim 1, wherein $N_2 = 2^k$, k is arbitrary, and the step of forming (240) the result array ($\hat{X}$) comprises applying the Radix-2 algorithm on the second intermediate array (g).

4. Method according to claim 1, wherein $N_2 = 4^k$, k is arbitrary and the step of forming (240) the result array ($\hat{X}$) comprises applying the Radix-4 algorithm on the second intermediate array (g).

5. Method according to claim 1, wherein $N_2$ is a prime integer and the step of forming (240) the result array ($\hat{X}$) comprises applying the PFA algorithm on the second intermediate array (g).

6. Method according to claim 5, wherein $N_2 = 3$ or 5 or 12.

7. Computer program product, comprising instructions that, when executed on a computer, implement a method according to any of claims 1 to 6.

8. Apparatus for applying a Discrete Fourier Transform (DFT) to a signal vector (x) of a telecommunication signal having a given length (N), wherein $N = N_1{}^*N_2$, $N_1$ and $N_2$ are positive integers, comprising:

   - means for forming (210) an input array ($\hat{x}$), wherein each component satisfies the equation:

$$\hat{x}(n_1, n_2) = x(n_1 * N_2 + n_2)$$

   - means for forming (220) a first intermediate array (f), wherein each component satisfies the equation:

$$f(k_1, n_2) = \sum_{n_1=0}^{N_1-1} \hat{x}(n_1, n_2) W_{N_1}^{n_1 k_1}$$

   - means for forming (230) a second intermediate array (g) wherein each component satisfies the equation:

$$g(k_1, n_2) = f(k_1, n_2) W_N^{n_2 k_1}$$

   - means for forming (240) a result array ($\hat{X}$), wherein each array component satisfies the equation:

$$\hat{X}(k_1, k_2) = \sum_{n_2=0}^{N_2-1} g(k_1, n_2) W_{N_2}^{n_2 k_2}$$

9. Apparatus according to claim 8, wherein $N_2 = N_2'{}^* N_2''$, $N_2'$ and $N_2''$ are positive integers and wherein the means of forming (240) the result array ($\hat{X}$) comprises means for executing recursively using the second intermediate array (g) as input array (x) and $N = N_2 = N_2'{}^* N_2''$.

10. Apparatus according to claim 8, wherein $N_2 = 2^k$, k is arbitrary, and the means of forming (240) the result array ($\hat{X}$) applies the Radix-2 algorithm on the second intermediate array (g).

**11.** Apparatus according to claim 8, wherein $N_2 = 4^k$, k is arbitrary and the means of forming (240) the result array ($\hat{X}$) applies the Radix-4 algorithm on the second intermediate array (g).

**12.** Apparatus according to claim 8, wherein $N_2$ is a prime integer and the means of forming (240) the result array ($\hat{X}$) applies the PFA algorithm on the second intermediate array (g).

**13.** Apparatus according to claim 12, wherein $N_2 = 3$ or 5 or 12.

# Transmitter structure for SC-FDMA

Coded symbol rate= R

$N_{TX}$ symbols

DFT

Size-$N_{TX}$

Sub-carrier Mapping

IFFT

Size-$N_{FFT}$

CP insertion

Fig. 1

EP 1 909 190 A1

Fig. 2

Fig. 3

Fig.4

# Fig. 5

EP 1 909 190 A1

# Fig. 6

## Fig. 7

# Fig. 8

Error Signal Power (MSE)

Legend:
- × Cooley-Tukey
- + Mixed-Radix
- □ Chirp-z T.
- ◇ CT/PFA

DFT length

## EUROPEAN SEARCH REPORT

European Patent
Office

**Application Number**

EP 06 02 0752

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRIGGS W L ET AL: "The DFT - An Owner's Manual for the Discrete Fourier Transform" 1995, SOCIETY FOR INDUSTRIAL AND APPLIED MATHEMATICS (SIAM) , PHILADELPHIA, US , XP002439044 * section 10.3 * | 1-13 | INV. G06F17/14 |
| X | DUHAMEL P ET AL: "Fast Fourier Transforms: A tutorial review and a state of the art" SIGNAL PROCESSING, vol. 19, no. 4, 1 April 1990 (1990-04-01), pages 259-299, XP000113680 Elsevier Science Publishers B.V. Amsterdam, NL ISSN: 0165-1684 * section 4.1 * | 1-13 | |

**TECHNICAL FIELDS SEARCHED (IPC)**

G06F

The present search report has been drawn up for all claims

| Place of search | Date of completion of the search | Examiner |
|---|---|---|
| Berlin | 25 June 2007 | DOMINGO VECCHIONI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6704760 B2

**Non-patent literature cited in the description**

- **R. TOLIMIERI ; M. AN ; C. LU.** Algorithms for discrete Fourier transform and convolution. Springer-Verlag, 1989
- **C.M. RADER.** Discrete Fourier Transforms when the Number of Data Samples is Prime. *Proc. IEEE,* 1968, vol. 56, 1107-1108
- **S. WINOGRAD.** On computing the Discrete Fourier Transform. *Proc. Nat. Acad. Sci. USA,* April 1976, vol. 73 (4), 1005-1006
- **D. P. KOLBA ; T. W. PARKS.** A Prime Factor FFT Algorithm Using High Speed Convolution. *IEEE Transactions on Acoustics, Speech, and Signal Processing,* August 1977, vol. 25 (4), 781-794
- **R. C. SINGLETON.** An Algorithm for Computing the Mixed Radix Fast Fourier Transform. *IEEE Transactions on Audio and Electroacoustics,* June 1969, vol. 17 (2), 93-103
- **C. S. BURRUS ; T.W. PARKS.** DFT/FFT and Convolution Algorithms. John Wiley & Sons, 1985
- **H. W. SCHÜSSLER.** Digitale Signalverarbeitung 1. Springer-Verlag, 1994